# EUROPÄISCHE PATENTSCHRIFT

(11) **EP 1 105 836 B1**
(45) Veröffentlichungstag und Bekanntmachung des Hinweises auf die Patenterteilung: **24.07.2002**
(21) Anmeldenummer: 99942863.4
(22) Anmeldetag: 13.08.1999
(51) Int. Cl.: G06K 15/02

(54) **DRUCKSYSTEM ZUM BEDRUCKEN EINES AUFZEICHNUNGSTRÄGERS MIT ZWEI DRUCKERN SOWIE VERFAHREN ZUM BETRIEB EINES DERARTIGEN DRUCKSYSTEMS**
PRINTING SYSTEM FOR PRINTING A RECORDING MEDIUM USING TWO PRINTERS, AND A METHOD FOR OPERATING SUCH A PRINTING SYSTEM
SYSTEME D'IMPRESSION POUR L'IMPRESSION D'UN SUPPORT DE REPRODUCTION AVEC DEUX IMPRIMANTES, ET PROCEDE PERMETTANT DE FAIRE FONCTIONNER UN TEL SYSTEME D'IMPRESSION

(30) Priorität: 13.08.1998 DE 19836744
(43) Veröffentlichungstag der Anmeldung: 13.06.2001
(73) Patentinhaber: Océ Printing Systems GmbH, 85586 Poing (DE)
(72) Erfinder: WARBUS, Volker, D-82041 Oberhaching (DE); BÖCK, Heinz, D-84416 Taufkirchen (DE); HOFMANN, Holger, D-85435 Erding (DE); HAUSMANN, Bernd, D-82140 Olching (DE); GIBISCH, Herbert, D-81927 München (DE); KEIL, Wolfram, D-85643 Steinhöring (DE); STÜRZER, Anton, D-85567 Grafing (DE); BÄUMLER, Ulrich, D-85586 Poing (DE)
(74) Vertreter: Schaumburg, Thoenes, Thurn Patentanwälte
(86) Internationale Anmeldenummer: EP9905940
(87) Internationale Veröffentlichungsnummer: WO0010121

(56) Entgegenhaltungen:
- WO-A-97/46393
- US-A- 5 208 640
- US-A- 5 548 390

## Beschreibung

Die Erfindung betrifft ein Drucksystem, bei dem ein Aufzeichnungsträger zuerst von einem ersten Drucker und dann von einem zweiten Drucker bedruckt wird, sowie ein Verfahren zum Drucken mit einem solchen Drucksystem.

In Drucksystemen dieser Art wird der Aufzeichnungsträger jeweils durch einen ersten Drucker bedruckt, und dann einem zweiten, im wesentlichen zum ersten Drucker artgleichen Drukker zugeführt. Der Aufzeichnungsträger kann dabei in Form einzelner Blätter vorliegen, oder auch als bahnförmiger Aufzeichnungsträger. Er kann je nach Bedarf aus Papier, Kunststoff-Folienmaterial oder auch aus anderen Materialien bestehen. Je nach Ausführungsform der Druckgeräte kann Liporello-Ware, Rollenware mit Randlochung oder Rollenware ohne Randlochung bedruckt werden.

Ein Tandem-Drucksystem ist in der EP 154 695 B1 beschrieben. In der EP 0 239 845 B1 ist zur Ansteuerung eines derartigen Drucksystems vorgesehen, die Hauptsteuereinrichtungen der beiden Drucker einerseits über einen Host-Computer auf einer Datensteuerungsebene zu verbinden und andererseits über eine zweite Verbindung auf einer Gerätesteuerungsebene.

Bei elektrografischen Hochleistungs-Druckern mit Druckleistungen von mehr als 40 Seiten pro Minute wird häufig randgelochtes, bahnförmiges Papier als Aufzeichnungsträger verwendet. Dieses Papier hat an seinen Längskantenseiten seitliche Löcher zum Randtransport und zur Positionsüberwachung des Papiers. Es wird dabei mittels Traktorraupen transportiert, die in die seitlichen Transportlöcher des Papiers eingreifen. Die Randlochung wird zur Antriebssteuerung, insbesondere bei der Verarbeitung von vorbedrucktem Papier genutzt. Bei derartigen Anwendungen soll die im elektrografischen Drucker aufgebrachte Information möglichst genau in den Vordruck eingepaßt werden. Für derart lagegenaues Drucken muß die Lage der Papierbahn in Transportrichtung exakt auf deren Antrieb bzw. auf die Bewegung der zur Aufzeichnung verwendeten Fotoleitertrommel justiert bzw. synchronisiert sein.

Vorbedrucktes Papier liegt im zweiten Drucker eines Tandem-Drucksystems auch dann vor, wenn das Papier vom ersten Drukker bedruckt wird und anschließend dem zweiten Drucker zugeführt wird. Dies kann beispielsweise dann der Fall sein, wenn der erste Drucker in einer ersten Farbe und der zweite Drukker in einer zweiten Farbe auf dieselbe Seite druckt.

Aus der DE-A-195 00 169 A ist ein Verfahren zum Steuern des Druckvorgangs in einem Tandem-Drucksystem bekannt, bei dem Endlospapier zum doppelseitigen Bedrucken zunächst dem ersten Drucker zugeführt und dort einseitig bedruckt wird und schließlich die Papierbahn zum Bedrucken der Rückseite dem zweiten Drucker zugeführt wird. Dabei werden gerade Seiten vom ersten Drucker gedruckt und ungerade Seiten vom zweiten Drucker.

In der US-A-5,526,107 ist ein Farbdruckgerät beschrieben, bei dem die verschiedenen Farbauszüge in verschiedenen, im Papiertransportweg aufeinaderfolgenden Druckwerken gedruckt werden. Die Druckvorgänge der jeweils nachfolgenden Druckwerke werden dabei mit Marken gesteuert um einen passergenauen Druck zu erreichen.

Aus der US-A-5,208,640 ist ein System bekannt, bei dem Druckdaten für mehrere Laserdrucker synchronisiert werden. Druckdaten werden in einem FIFO-Puffer abgelegt und aus diesem wieder abgerufen. In diesem Dokument findet sich jedoch kein Hinweis darauf, daß einer der Drucker den anderen mit Kontrolldaten versorgt.

Es ist Aufgabe der Erfindung, in einem Tandem-Drucksystem die korrekte Zuordnung der von den beiden Druckern gedruckten Druckseiten auf dem Aufzeichnungsträger mit möglichst hoher Sicherheit zu gewährleisten.

Diese Aufgabe wird durch die in den Ansprüchen 1 und 9 angegebene Erfindung gelöst. Vorteilhafte Ausführungsformen der Erfindung sind Gegenstand der Unteransprüche.

Erfindungsgemäß werden die Druckdaten von einer Druckdatenquelle dem ersten und dem zweiten Drucker jeweils seitenweise zugeführt. Die Seiten-Daten können dabei dem ersten und dem zweiten Drucker jeweils abwechselnd zugeführt werden oder farbauszugsweise, beispielsweise in einem sogenannten Highlight Color Mode dem ersten Drucker die ihm zugeordneten Farbseiten (z.B. der Farbe Schwarz) und entsprechend dem anderen Drucker die diesem zugeordneten Druckdaten (z.B. der Farbe Blau). Entsprechend kann für einen Duplex-Druck eine Vorderseiten-Zuordnung und Rückseiten-Zuordnung festgelegt sein, z.B., daß der erste Drucker auf die Vorderseite des Aufzeichnungsträgers druckt und der zweite Drucker auf die Rückseite. Zusammen mit den jeweiligen Druckdaten werden jeweils Seiteninformationsdaten von der Druckdatenquelle an die beiden Drucker übermittelt. Der erste Drucker legt im Zuge seines Druckvorgangs die Seiteninformationsdaten oder eine andere, von ihm erzeugte Seiteninformation in einem Zwischenspeicher ab. Zu einem vorgegebenen Zeitpunkt - insbesondere, sobald die vom ersten Drucker gedruckte Seite zum Druck im zweiten Drucker ansteht, wird dann überprüft, ob die dem zweiten Drucker von der Druckdatenquelle übermittelte Seiteninformation mit der im Zwischenspeicher gespeicherten Seiteninformation einer vorbestimmten Regel entspricht. Der Inhalt der Regel hängt vom Druckmodus ab, der z.B. Simplex, Duplex oder Highlight Color sein kann. Er kann am Tandem-Drucksystem ausgewählt werden oder bereits in den Druckdaten enthalten sein.

Mit dieser Form der Synchronisationsüberwachung wird erreicht, daß die Druckdaten, die im ersten Drucker auf den Aufzeichnungsträger übertragen wurden, seitengenau mit den Druckdaten, die im zweiten Drucker auf den Aufzeichnungsträger übertragen werden, übereinstimmt. Die bei dem Vergleich verwendete Regel ist dabei ohne weiteres an die jeweiligen Druckdaten bzw. an den jeweiligen Druckmode anpaßbar. Beispielsweise kann in den Druckdaten bereits bei den Kennungsinformationen gespeichert sein, ob Druckdaten unterschiedlicher Farben für die beiden Drucker vorliegen (Highlight Color Mode) oder ob in einem Duplex-Mode im ersten Drucker auf der Vorderseite und im zweiten Drucker auf der Rückseite desselben Blattes gedruckt werden soll.

Ein Vorteil der Erfindung ergibt sich insbesondere dann, wenn das Drucksystem nach einem Stopp wieder angefahren wird. Die im erfindungsgemäßen Speicher gespeicherten Seiteninformationen bleiben dabei erhalten und können beim erneuten Starten des Drucksystems wieder verwendet werden, so daß in vielen Fällen keine Neu-Synchronisierung der beiden Drucker mehr nötig ist.

In einer Ausführungsform der Erfindung wird als Seiteninformation beispielsweise eine Seitennummer überprüft. Insbesondere kann in einem Highlightcolor-Druckmodus überprüft werden, ob die vom ersten Drucker gespeicherte Seitennummer mit der aktuellen Seitennummer des zweiten Druckers übereinstimmt und im Duplex-Druckmodus, ob die Seitennummer im zweiten Drucker um eins gegenüber der Seitennummer vom Zwischenspeicher höher oder niedriger ist. Als Seitennummer kann eine durch den Druckauftrag, d.h. durch die vom Drucksystem empfangenen Druckdaten und von diesen vorgegebene Seitennummer verwendet werden oder eine andere, beispielsweise beliebig fortlaufende und intern im Drucksystem erzeugte Seitennummer.

Mit der Erfindung wird eine elektronisch-seitenweise Synchronisationsüberwachung für die beiden Drucker erreicht, die keine optischen Marken auf dem Aufzeichnungsträger benötigt. Dennoch kann es vorteilhaft sein, bei der erstmaligen Inbetriebnahme oder vor einem Druckauftrag eine oder mehrere Synchronisierungsseiten zu drucken, bei denen physikalische Marken auf dem Aufzeichnungsträger erzeugt werden, z.B. optische Marken, auf das Papier geruckt werden. Derartige Synchronisierseiten dienen dazu, die erste zu druckende Datenseite des zweiten Druckers hochgenau zu der ersten gedruckten Seite des ersten Druckers zu justieren. Dazu kann es vorteilhaft sein, einen optischen Sensor im zweiten Drucker vorzusehen, wobei auch hier eine Nummernvergabe vorteilhaft sein kann. Sie kann beispielsweise durch eine Kodierung mittels Bar-Code erreicht werden. Der erste Drucker sendet dann auf elektronischem Wege dem zweiten Drucker eine Information zum Synchronisieren. Hat der zweite Drucker mit dem optoelektronischen Sensor die erwartete Synchronmarke gelesen, so ist das Drucksystem millimetergenau synchronisiert bzw. justiert. Der zweite Drucker erkennt nun aufgrund der Markenlage, wo die erste Datenseite beginnt. Die Synchronisierseiten können von Nachbearbeitungsgeräten, die dem zweiten Drucker nachgeschaltet sind, ausgesondert werden.

Bei der erfindungsgemäßen, elektronisch-seitenweisen Synchronitätsüberwachung wird eine Seiteninformation bzw. Markennummer jeder Datenseite verwendet. Der erste Drucker veranlaßt dabei das Erzeugen und/oder Zwischenspeichern der Seiteninformation in einem Speicher im ersten oder zweiten Drucker. Der Speicher kann insbesondere ein first-in-first-out-Registerspeicher (FIFO) sein. Sobald der zweite Drucker die für ihn bestimmten Druckdaten zusammen mit den entsprechenden Seitennummern von der Druckdatenquelle, d.h. vom Host-Rechner oder Print-Server empfängt, wird die Seitennummer bzw. Seitenmarkierung mit der im Speicher von dem ersten Drucker abgelegten Seiteninformation verglichen. Entspricht dieser Vergleich einer vorbestimmten, zu dem aktuellen Druckmodus gehörenden Regel, so wird der Druckvorgang im zweiten Drucker durchgeführt. Falls sich bei dem Vergleich dagegen Abweichungen von der Regel ergeben, wird der Druckprozeß angehalten und ein Fehler gemeldet.

Mit der Erfindung ist es insbesondere möglich, zum Bedrucken von Papier ohne Randlochung die gesamte Breite des Aufzeichnungsträgers zu nutzen, ohne daß optische Marken auf diesem gedruckt werden müssen. Weiterhin wird durch die Erfindung die Synchronisierung wesentlich sicherer, weil etwaige Lesefehler von optischen Marken bei der laufenden Synchronitätsüberwachung nicht mehr auftreten können. Dies ist insbesondere in Hochleistungs-Drucksystemen vorteilhaft, bei denen eine fehlerhafte Synchronisierung u.U. erst später bemerkt wird und ein Geräteausfall zu einer erheblichen Störung im gesamten Druck- bzw. Produktionsablauf führt.

Zum Festlegen des Zeitpunkts des Vergleichs ist es insbesondere vorteilhaft, den Antrieb des Aufzeichnungsträgers im ersten und/oder im zweiten Drucker im Wirkverbindung mit dem Vergleichselement zu bringen. Dies kann insbesondere durch einen gemeinsamen Taktgeber in einem taktgesteuerten elektronischen Drucksystem erfolgen. Weiterhin vorteilhaft ist es, die Seiteninformation vom ersten Drucker zusammen mit einem Kommunikationsprotokoll an den zweiten Drucker zu übermitteln. Hierdurch wird die Steuerungssicherheit weiter erhöht.

In einem weiteren Aspekt der Erfindung ist vorgesehen, daß der erste Drucker auf dem Aufzeichnungsträger eine Synchronmarke druckt und daß diese Synchronmarke von einem Sensor im zweiten Drucker gelesen und zur Steuerung des dortigen Druckvorgangs verwendet wird. Hiermit läßt sich eine hochgenaue Zuordnung der durch die beiden Drucker bewirkten Druckbilder auf dem Aufzeichnungstäger erreichen.

Nachfolgend werden Ausführungsbeispiele der Erfindung anhand einiger Figuren näher erläutert:

Es zeigen:
- Figur 1:: Ein Drucksystem mit zwei Druckern,
- Figur 2:: Bestandteile einer Gerätesteuerung, und
- Figur 3:: Ablauf einer Synchronisierungsprozedur.

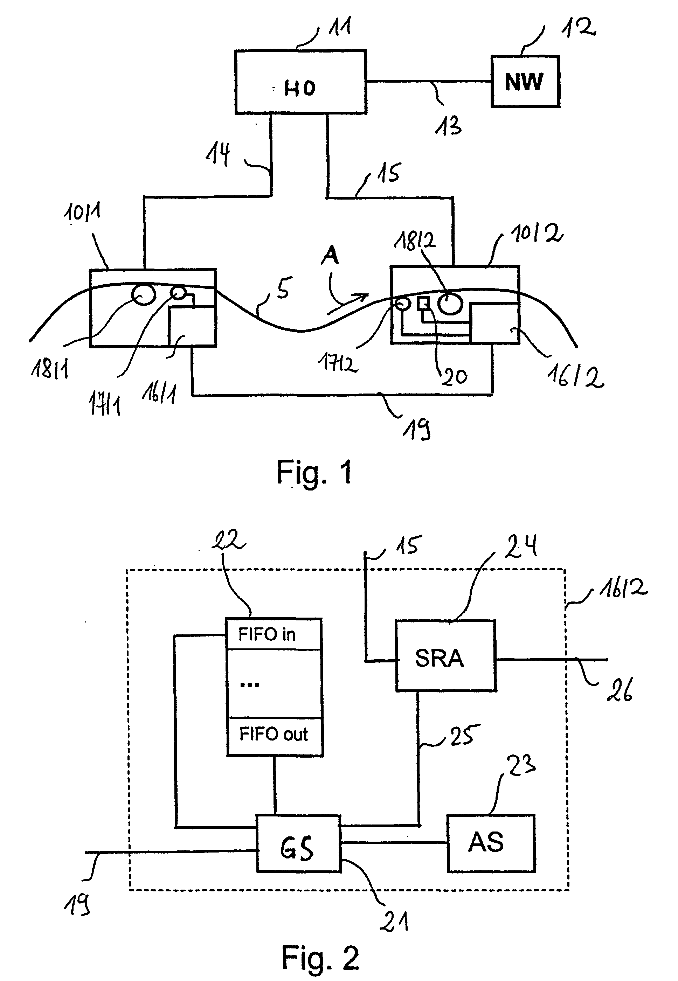

In Figur 1 ist ein Drucksystem gezeigt, bei dem ein bahnförmiger Aufzeichnungsträger 5 aus Papier ohne Randlöcher zunächst von einem ersten Drucker 10/1 bedruckt wird und von diesem entlang einer Transportrichtung A einem zweiten Drukker 10/2 zum Bedrucken zugeführt wird. Die Druckdaten werden über ein Netzwerk 12 über eine Datenleitung 13 einem Host-Computer 11 zugeführt, der als Druck-Server wirkt. In dem Druck-Server werden die ankommenden Druckaufträge aufbereitet, so daß sie seitengenau in beiden Druckern 10/1 und 10/2 zugeführt werden können. Für die Seitenaufteilung kann beispielsweise vorgesehen werden, daß der Drucker 10/1 alle ungeraden Seiten des Druckauftrags druckt, während Drucker 10/2 alle geraden Seiten des Druckauftrags druckt. Um einen Duplex-Druck zu bewirken, wird die Papierbahn 5 zwischen diesen beiden Druckern 10/1 und 10/2 gewendet. Es kann aber auch vorgesehen sein, daß mit dem Drucker 10/1 die Druckdaten einer Seite, welche in Schwarz gedruckt werden soll, gedruckt werden, während im Drucker 10/2 die Druckdaten der jeweils gleichen Seite, welche in einer anderen Farbe (z.B. Rot oder Blau) gedruckt werden.

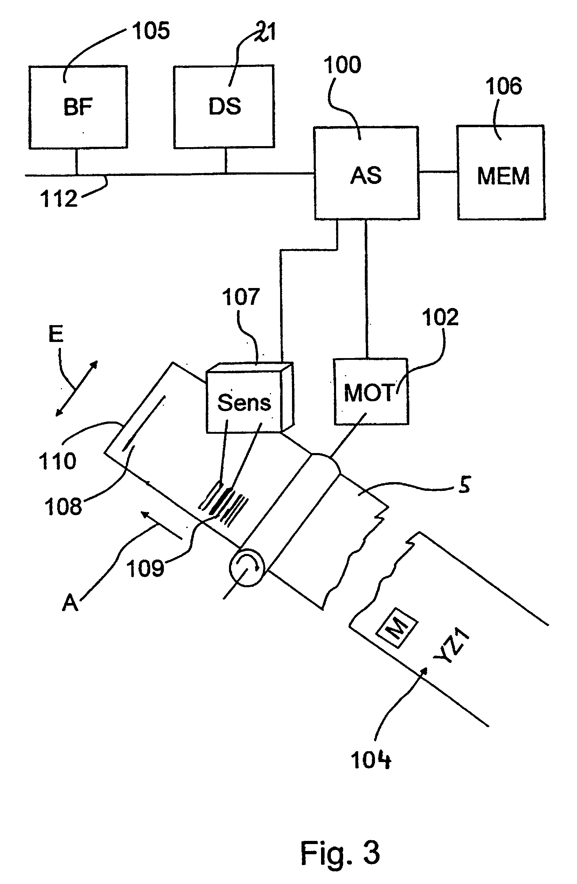

Die Druckdaten werden dem ersten Drucker 10/1 vom Host-Computer 11 über eine Datenleitung 14 zugeführt und dem Drucker 10/2 über eine Datenleitung 15. Eine Gerätesteuerung 16/1 im ersten Drucker 10/1 verarbeitet diese Daten und führt sie einer Umdruckstation 18/1 zu, die in an sich bekannter Weise eine fotoelektrische Trommel, eine Belichtungseinheit sowie eine Entwicklerstation zum Auftrag von Toner enthält. Nach dem Umdruck der Daten auf die Papierbahn 5 wird das dort erzeugte Bild in an sich bekannter Weise fixiert und die Papierbahn aus dem Drucker 10/1 ausgegeben. Die Steuerung 16/1 des Druckers umfaßt neben der Datensteuerungsebene auch eine Gerätesteuerungsebene, auf der interne Aggregate wie die Antriebssteuerung 17/1 des Druckers angesteuert werden. Außerdem ist die erste Steuerung 16/1 über eine Gerätesteuerungsleitung 19 mit der entsprechenden Steuerung 16/2 des zweiten Druckers 10/2 verbunden. Über die Gerätesteuerungsleitung 19 werden die Antriebe 17/1 des ersten Druckers 10/1 und 17/2 des zweiten Druckers synchronisiert. Dadurch kann eine positionsgenaue Übereinstimmung des Drucks im ersten Drucker 10/1 und im zweiten Drucker 10/2 auf der Papierbahn 5 erzeugt werden. Zur Synchronisierung dient ein optischer Sensor 20, mit dem optische Marken die Synchronisierungsstriche, Bar-Codes, bestimmte alpha-numerische Zeichen oder dgl. erkannt werden können, die vom ersten Drucker 10/1 auf der Papierbahn 5 erzeugt werden und vom Markensensor 20 gelesen werden. Ein möglicher Ablauf einer derartigen Synchronisierung wird später anhand von Figur 3 genauer beschrieben.

In Figur 2 sind Details der zweiten Gerätesteuerung 16/2 gezeigt. Die Druckdaten gelangen vom Host-Computer an einen Raster-Prozessor 24 (SRA). In diesen Informationen ist eine Seiteninformation enthalten, die die jeweiligen Druckdaten einer genauen Seite des Druckdatenstroms zuordnet. Die Seiteninformation muß nicht zwangsläufig derjenigen Seiteninformation entsprechen, welche im Druckdatenstrom selbst enthalten ist, sie kann vielmehr vom Host-Computer mit einer beliebigen, internen Numerierung bzw. einem entsprechenden Code versehen sein. Der Rasterprozessor 24 leitet diese Seiteninformation über die Steuerungsleitung 25 einem Gerätesteuerungsprozessor 21 zu. Andererseits erhält der Gerätesteuerungsprozessor 21 fortlaufend über die Gerätesteuerungsleitung 19 entsprechende Seiteninformationen von der Druckersteuerung 16/1, die ihr mitteilen, welche Seiten bereits vom Drucker 10/1 gedruckt worden sind. Der Gerätesteuerungsprozessor 21 leitet diese Seiteninformationen einem first-infirst-out-Registerspeicher 22 zu, indem die Seiteninformationen des ersten Druckers 10/1 zwischengespeichert werden.

Ausgehend von den gespeicherten Daten über die Zeitverzögerung bzw. Schrittanzahl, die benötigt wird, um die Papierbahn 5 von der ersten Umdruckzone 18/1 zur zweiten Umdruckzone 18/2 zu transportieren, holt der Gerätesteuerungsprozessor 21 die Seiteninformation aus dem Speicher 22 und vergleicht diese Seitendaten des ersten Druckers 10/1 mit den aktuell vom SRA-Controller 24 über Leitung 25 zur Verfügung gestellten Seiten-Daten im zweiten Drucker. Entsprechen die beiden Seiten-Daten der voreingestellten Regel, z.B. daß im Duplex-Modus der Drucker 10/1 Seite Nummer 19 gedruckt hat und aktuell am Raster-Prozessor 24 Seite Nummer 20 zum Druck ansteht, so wird der Druck in Drucker 10/2 freigegeben und der Rasterprozessor 24 kann die von ihm aufgerasterten Daten über Leitung 26 an die Umdruckstation 18/2 leiten.

Die Übertragung der Seitendaten zwischen den beiden Druckern 10/1 und 10/2 über die Leitung 19 erfolgt nach einem definierten Datenprotokoll, bei dem Sicherheitsmechanismen eingebaut werden können, so daß die übermittelte Seiteninformation sicher in den Speicher 22 gelangt. Sofern die Seitendaten zwischen dem Drucker 10/1 und dem Raster-Prozessor 24 nicht übereinstimmen, gibt der Gerätesteuerungsprozessor 21 eine Fehlermeldung aus. Danach kann das Drucksystem angehalten werden. Meldet beispielsweise die Antriebssteuerung 23 des zweiten Druckers oder die entsprechende Antriebssteuerung des ersten Druckers 10/1 einen Transportfehler, kann die Gerätesteuerung 16/1 oder 16/2 ebenfalls mit einem Stopp des Drucksystems reagieren. Die Seiteninformationen im Speicher 22 und im Raster-Prozessor 24 bleiben erhalten und können beim erneuten Starten des Drucksystems wieder verwendet werden, so daß in vielen Fällen keine neue Synchronisierung mehr nötig ist.

Anhand der Figur 3 wird nunmehr die einmalige Synchronisierungsprozedur beschrieben, mit der die beiden Antriebssteuerungen in den Druckern 10/1 und 10/2 aufeinander abgeglichen werden. Figur 3 zeigt dazu die Sensoranordnung im zweiten Drucker 10/2. Die eintreffende Papierbahn 5 enthält auf ihrer ersten Seite, der sogenannten Synchronisierseite, eine Synchronmarke 108 in Form eines schwarzen Striches, der quer über die Seite verläuft. Dieser Strich wurde von der Steuerung des ersten Druckers 10/1 erzeugt und vom ersten Drucker 10/1 auf das Papier gedruckt. Die Antriebssteuerung 100 des zweiten Druckers treibt den Motor 102 des zweiten Druckers 10/2 so lange an, bis sich die Synchronmarke 108 im Erfassungsbereich des optischen Sensors 20 befindet. Dessen Elektronik 107 erkennt die Sensormarke 108 und liefert entsprechende Synchron-Signale über die Antriebssteuerung 100 an den Steuerungsprozessor 21. Dieser wertet die Zeit bzw. die Anzahl der Antriebsschritte des Motors 102 aus, die zwischen dem Drucken im ersten Drucker 10/1 und dem Erfassen der Synchronmarke 108 im zweiten Drucker 10/2 benötigt wurden. Diese Werte werden in einem Speicher 106 der Antriebssteuerung 100 gespeichert und dazu verwendet, später die elektronische Seiteninformation zeit- bzw. schrittgenau auszulesen. Bedienerseitige Eingaben und Eingriffe in das System sind über ein Bedienfeld 105 möglich, welches über einen Datenbus 112 mit den anderen Steuerungskomponenten der Gerätesteuerung 16/2 verbunden ist.

Die in Figur 3 gezeigte Synchron-Marke 108 und der Bar-Code 109 werden mit dem Sensor 20 detektiert. Sie werden vom ersten Drucker 10/1 des Drucksystems nur zum Zwecke der Start-Synchronisation aufgedruckt und befinden sich vor den Druckdaten 104, die vom Host-Rechner 11 an den ersten Drucker 10/1 übermittelt wurden.

Es wurden Ausführungsbeispiele der Erfindung beschrieben. Dabei ist klar, daß jederzeit Weiterentwicklungen und Abwandlungen der Erfindung angegeben werden können. Beispielsweise kann vorgesehen sein, Synchron-Informationen wie dünne Linienbalken auch im späteren Druckbetrieb, d.h. während des Druckens eines Druck-Jobs an bestimmten Stellen (z. B. an Seitenübergängen) anzuordnen, um die Feinsynchronisation der beiden Antriebe nachregeln zu können. Weiterhin können die Synchron- oder Bar-Code Informationen vom Drucker 10/1 auch zwischen die Druckdaten eingespielt bzw. gedruckt werden. Die Position der optisch gedruckten Marken wie der Synchronmarke oder des Barcodes kann je nach Papierart oder Druckmodus variieren.

Die Erfindung ist sowohl für randgelochtes Papier mit Traktorantrieben geeignet als auch für Papier ohne Randlochung, welches von Friktionsantrieben transportiert wird. Ein Vorteil der Erfindung liegt dabei darin, daß durch die elektronische bzw. virtuelle Marke auf den Aufzeichnungsträger kein Druck mehr erfolgen muß. Somit kann die gesamte Breite des Aufzeichnungsträgers ohne Makulatur zur Druckbilddarstellung verwendet werden. Die Erfindung kann sowohl für Drucksysteme mit Endlos-Papier auch für Einzelblatt-Drucksysteme verwendet werden.

Bei Drucksystemen, die auf Endlos-Papier drucken, kann vorgesehen sein, die Aufzeichnungsträgerbahn zwischen den beiden Druckern zu wenden, so daß ein Duplex-Druck ermöglicht wird. In diesem Fall ist es vorteilhaft, einen ersten Sensor im zweiten Drucker oberhalb der Aufzeichnungsträgerbahn anzuordnen zum Detektieren der Synchron-Marken im Simplex-Betrieb und einen zweiten Sensor auf der Unterseite der Aufzeichnungsträgerbahn zum Detektieren der vom ersten Drucker gedruckten Marken im Duplex-Betrieb. Weiterhin kann es vorteilhaft sein, den Sensor quer zur Aufzeichnungsrichtung entlang einer Richtung E, wie in Figur 3 gezeigt, beweglich anzuordnen. Hierdurch kann der Sensor insbesondere an verschiedene Positionen der zu detektierenden Marken angepaßt werden. Dies ist vorteilhaft, wenn ein Drucksystem sowohl für randgelochtes Papier als auch für Papier ohne Randlochung vorgesehen ist.

Schließlich kann zur Feinsynchronisation bzw. zur lagegenauen Zuordnung der beiden Druckbilder auf einer Seite vorgesehen sein, daß beide Drucker je eine Synchronmarke drucken und daß diese Synchronmarke in Transportrichtung hinter der zweiten Umdruckstation abgetastet und zur Regelung der Antriebe verwendet wird.

Als Synchronmarke kann statt der separaten optischen Marke auch der Beginn oder das Ende eines Barcodes verwendet werden oder eine physikalisch andersartige Marke wie ein Stanzloch oder eine Kerbe, vorausgesetzt die hierfür nötigen Einrichtungen wie Stanzwerkzeuge und entsprechende Leseeinrichtungen für solche Marken sind in den Druckern vorgesehen.

### Bezugszeichenliste

- 5: Aufzeichnungsträger
- 10/1: erster Drucker
- 10/2: zweiter Drucker
- 11: Druckserver
- 12: Netzwerk
- 13: Datenleitung
- 14: Datenleitung zum ersten Drucker
- 15: Datenleitung zum zweiten Drucker
- 16/1: Steuerung des ersten Druckers
- 16/2: Steuerung des zweiten Druckers
- 17/1: Antrieb im ersten Drucker
- 17/2: Antrieb im zweiten Drucker
- 18/1: erste Umdruckstation
- 18/2: zweite Umdruckstation
- 19: Gerätesteuerung
- 20: Optischer Sensor
- 21: Gerätesteuerungsprozessor
- 22: FIFO-Speicher
- 23: Antriebssteuerung
- 24: Rasterprozessor
- 25: Steuerungsleitung
- 26: Rasterleitung
- 100: Antriebssteuerung
- 102: Schrittmotor
- 104: Druckergebnis des ersten Druckers
- 105: Bedienfeld
- 106: Speicher
- 107: Markensensor-Elektronik
- 108: Synchronmarke
- 109: Barcode-Marke
- 110: Vorderkante der Papierbahn
- 112: Datenbus

## Patentansprüche

1. Druckverfahren, bei dem ein Aufzeichnungsträger (5) zuerst von einem ersten Drucker (10/1) und dann von einem zweiten Drucker (10/2) bedruckt wird, **dadurch gekennzeichnet, dass**
a) zu Beginn des Druckvorganges eine Synchronisationsprozedur durchgeführt wird, bei der beide Drucker (10/1, 10/2) unter Verwendung einer auf dem Aufzeichnungsträger (5) aufgebrachten Synchronmarke (108) aufeinander abgeglichen werden,
b) die Druckdaten seitenweise von einer Druckdatenquelle (11) dem ersten und dem zweiten Drucker (10/1, 10/2) zugeführt werden,
c) zusammen mit den jeweiligen Druckdaten Informationen über die Seitennummern an die Drucker (10/1, 10/2) übermittelt werden,
d) vom ersten Drucker (10/1) im Zuge seines Druckvorganges mindestens eine Information über die Seitennummer einer von ihm gedruckten Seite in einen Zwischenspeicher (22) abgelegt wird und
e) seitenweise überprüft wird, ob die dem zweiten Drucker (10/2) von der Druckdatenquelle (11) übermittelten Informationen und die im Zwischenspeicher (22) gespeicherten Informationen einer vom Druckmodus abhängigen vorbestimmten Regel entsprechen,
f) und bei dem bei einem positiven Prüfergebnis der zweite Drucker (10/2) den Druckvorgang durchführt und bei einem negativen Prüfergebnis ein Fehler gemeldet wird.

2. Verfahren nach Anspruch 1, **dadurch gekennzeichnet, daß** das Überprüfen der beiden Informationen zu einem Zeitpunkt erfolgt, der derart durch den Vorschub des Aufzeichnungsträgers (5) bestimmt ist, daß die Druckdaten seitengenau auf dem Aufzeichnungsträger (5) wiedergegeben werden.

3. Verfahren nach Anspruch 2, wobei als Zwischenspeicher (22) ein FIFO-Speicher (FIFO) verwendet wird.

4. Verfahren nach den Ansprüchen 2 und 3, wobei die Länge des FIFO-Speichers (FIFO) der zwischen den Druckern (10/1, 10/2) vorhandenen Anzahl der Seiten des Aufzeichnungsträgers (5) entspricht und wobei das Auslesen des FIFO-Speichers (FIFO) durch den Vorschub des Aufzeichnungsträgers (5) gesteuert wird.

5. Verfahren nach einem der Ansprüche 1 bis 4, **dadurch gekennzeichnet, daß** die Überprüfung im zweiten Drucker (10/2) durchgeführt wird.

6. Verfahren nach einem der vorhergehenden Ansprüche, wobei die Seiteninformation zusammen mit einem Kommunikationsprotokoll von der Gerätesteuerung (16/1)des ersten Druckers (10/1) an die Gerätesteuerung (16/2) des zweiten Druckers (10/2) übermittelt wird.

7. Verfahren nach einem der vorhergehenden Ansprüche, wobei zur lagegenauen Einpassung des Druckbildes auf dem Aufzeichnungsträger (5) vom ersten Drucker (10/1) eine Synchronmarke (110) erzeugt wird, die von einer Sensoranordnung (20, 107) im zweiten Drucker (10/2) gelesen wird, wobei das Sensorsignal zum lagegenauen Drucken im zweiten Drucker (10/2) verwendet wird.

8. Verfahren nach Anspruch 7, wobei die Synchronmarke (110) als optische Marke auf den Aufzeichnungsträger (5) gedruckt wird.

9. Drucksystem, bei dem ein Aufzeichnungsträger (5) zuerst von einem ersten Drucker (10/1) und dann von einem zweiten Drucker (10/2) bedruckt wird, **dadurch gekennzeichnet, dass**
a) Mittel vorgesehen sind, die zu Beginn des Druckvorganges eine Synchronisationsprozedur durchführen, bei der beide Drucker (10/1, 10/2) unter Verwendung einer auf dem Aufzeichnungsträger (5) aufgebrachten Synchronmarke (108) aufeinander abgeglichen werden,
b) Mittel vorgesehen sind, die Druckdaten seitenweise von einer Druckdatenquelle (11) dem ersten und dem zweiten Drucker (10/1, 10/2) zuführen,
c) Mittel vorgesehen sind, die zusammen mit den jeweiligen Druckdaten Informationen über die Seitennummern an die Drucker (10/1, 10/2) übermitteln, wobei
d) vom ersten Drucker (10/1) im Zuge seines Druckvorganges mindestens eine Information über die Seitennummer einer von ihm gedruckten Seite in einen Zwischenspeicher (22) abgelegt wird und
e) eine Vergleichseinheit (21) vorgesehen ist, die seitenweise überprüft, ob die dem zweiten Drucker (10/2) von der Druckdatenquelle (11) übermittelten Informationen und die im Zwischenspeicher (22) gespeicherten Informationen einer vom Druckmodus abhängigen vorbestimmten Regel entsprechen und wobei
f) der zweite Drucker (10/2) bei einem positiven Prüfergebnis den Druckvorgang durchführt und bei einem negativen Prüfergebnis ein Fehler gemeldet wird.

10. Drucksystem nach Anspruch 9, **dadurch gekennzeichnet, daß** der Aufzeichnungsträger (5) bahnförmig ist.

11. Drucksystem, nach einem der Ansprüche 9 oder 10, **dadurch gekennzeichnet, daß** der Zwischenspeicher (22) ein FIFO-Speicher (FIFO) ist.

12. Drucksystem nach einem der Ansprüche 9 bis 11, wobei die Vergleichseinheit (21) zumindest mit einer Antriebssteuerung (23) des zweiten Druckers (10/2) verbunden ist, so daß der Zeitpunkt des Überprüfens für die beiden Informationen in Abhängigkeit vom Vorschub des Aufzeichnungsträgers (5) steuerbar ist.

13. Drucksystem nach einem der Ansprüche 9 bis 12, wobei zur lagegenauen Einpassung des Druckbildes auf dem Aufzeichnungsträger (5) vom ersten Drucker (10/1) eine Synchronmarke (110) erzeugt wird und im zweiten Drucker (10/2) eine Sensoranordnung (20, 107) vorgesehen ist, welche die Synchronmarke (110) liest und wobei das dabei erzeugte Sensorsignal der Gerätesteuerung (21) des zweiten. Druckers (10/2) zugeführt wird zur Steuerung des Druckvorgangs im zweiten Drucker (10/2).

14. Ducksystem nach Anspruch 13, wobei pro Druckauftrag genau eine Synchronmarke (110) aufgedruckt wird und die Synchronmarke (110) vor der ersten, gedruckten Seite (104) des Druckauftrags liegt.

15. Drucksystem nach Anspruch 13, wobei pro Druckauftrag mehrere Synchronmarken (110) auf den Aufzeichnungsträger (5) gedruckt werden.

16. Drucksystem nach einem der Ansprüche 13 bis 15, wobei die Synchronmarke (110) Bestandteil eines Barcodes (109) ist.

## Claims

1. Printing method, wherein a recording medium (5) is printed first by a first printer (10/1) and then by a second printer (10/2), **characterized in that**
a) a synchronization procedure is implemented at the beginning of the printing operation, wherein both printers (10/1, 10/2) are matched to one another by using a synchronization mark (108) applied to the recording medium (5),
b) the print data are supplied page-by-page from a print data source (11) to the first and the second printer (10/1, 10/2),
c) pieces of information about the page numbers are communicated to the printers (10/1, 10/2) together with the respective print data,
d) the first printer (10/1) deposits at least one information about the page number of a page printed by it into a buffer memory (22) during the course of its printing operation; and
e) a check is carried out page-by-page to see whether the pieces of information communicated to the second printer (10/2) from the print data source (11) and the pieces of information stored in the buffer memory (22) correspond to a predetermined rule that is dependent on the printing mode,
f) and wherein, given a positive check result, the second printer (10/2) implements the printing operation and, given a negative check result, an error is reported.

2. Method according to claim 1, **characterized in that** the checking of the two pieces of information ensues at a point in time that is defined such by the feed of the recording medium (5) that the print data are reproduced page-accurately on the recording medium (5).

3. Method according to claim 2, wherein a FIFO memory (FIFO) is employed as buffer memory (22).

4. Method according to claims 2 and 3, wherein the length of the FIFO memory (FIFO) corresponds to the number of pages of the recording medium (5) present between the printers (10/1, 10/2), and wherein the readout of the FIFO memory (FIFO) is controlled by the feed of the recording medium (5).

5. Method according to one of the claims 1 to 4, **characterized in that** the check is implemented in the second printer (10/2).

6. Method according to one of the preceding claims, wherein the page information is communicated from the device controller (16/1) of the first printer (10/1) to the device controller (16/2) of the second printer (10/2) together with a communication protocol.

7. Method according to one of the preceding claims, wherein a synchronization mark (110) is generated on the recording medium (5) by the first printer (10/1) for the positionally accurate registration of the print image, said synchronization mark (110) being read by a sensor arrangement (20, 107) in the second printer (10/2), the sensor signal being employed for the positionally accurate printing in the second printer (10/2).

8. Method according to claim 7, wherein the synchronization mark (110) is printed onto the recording medium (5) as an optical mark.

9. Printing system, wherein a recording medium (5) is printed first by a first printer (10/1) and then by a second printer (10/2), **characterized in that**
a) means are provided which implement a synchronization procedure at the beginning of the printing operation, wherein both printers (10/1, 10/2) are matched to one another by using a synchronization mark (108) applied to the recording medium (5),
b) means are provided to supply the print data page-by-page from a print data source (11) to the first and the second printer (10/1, 10/2),
c) means are provided which communicate pieces of information about the page numbers to the printers (10/1, 10/2) together with the respective print data,
d) the first printer (10/1) deposits at least one information about the page number of a page printed by it into a buffer memory (22) during the course of its printing operation; and
e) a comparison unit (21) is provided which checks page-by-page to see whether the pieces of information communicated to the second printer (10/2) from the print data source (11) and the pieces of information stored in the buffer memory (22) correspond to a predetermined rule that is dependent on the printing mode, and wherein
f) given a positive check result, the second printer (10/2) implements the printing operation and, given a negative check result, an error is reported.

10. Printing system according to claim 9, **characterized in that** the recording medium (5) is web-shaped.

11. Printing system according to one of the claims 9 or 10, **characterized in that** the buffer memory (22) is a FIFO memory (FIFO).

12. Printing system according to one of the claims 9 to 11, wherein the comparison unit (21) is connected at least to a drive control (23) of the second printer (10/2), so that the point in time of the check for the two pieces of information can be controlled dependent on the feed of the recording medium (5).

13. Printing system according to one of the claims 9 to 12, wherein a synchronization mark (110) is generated on the recording medium (5) by the first printer (10/1) for the positionally accurate registration of the print image, and a sensor arrangement (20, 107) that reads the synchronization mark (110) is provided in the second printer (10/2), and wherein the sensor signal thereby generated is supplied to the device controller (21) of the second printer (10/2) for the control of the printing operation in the second printer (10/2).

14. Printing system according to claim 13, wherein exactly one synchronization mark (110) is printed per print job, and the synchronization mark (110) precedes the first printed page (104) of the print job.

15. Printing system according to claim 13, wherein a plurality of synchronization marks (110) are printed onto the recording medium (5) per print job.

16. Printing system according to one of the claims 13 to 15, wherein the synchronization mark (110) is a part of a bar code (109).

## Revendications

1. Procédé d'impression dans lequel un support d'information (5) est tout d'abord imprimé par un premier appareil d'impression (10/1) puis par un second appareil d'impression (10/2), **caractérisé en ce que**
a) une procédure de synchronisation, dans laquelle les deux appareils d'impression (10/1, 10/2) sont réglés l'un par rapport l'autre, est réalisée au début du processus d'impression en utilisant un repère de synchronisation (108) placé sur le support d'information (5),
b) les données d'impression sont amenées feuille à feuille d'une première source de données d'impression (11) aux premier et second appareils d'impression (10/1, 10/2),
c) les informations relatives aux numéros de pages sont transmises, conjointement aux données d'impression correspondantes, aux appareils d'impression (10/1, 10/2),
d) au moins une information relative au numéro de page d'une page imprimée par le premier appareil d'impression (10/1) est stockée par celui-ci dans une mémoire intermédiaire (22) au cours de son processus d'impression, et
e) il est effectué un test feuille à feuille pour vérifier si les informations transmises au second appareil d'impression (10/2) par la première source de données d'impression (11), et les informations mémorisées dans la mémoire intermédiaire (22) correspondent à une règle prédéterminée dépendant du mode d'impression,
f) et **en ce que** le second appareil d'impression (10/2) réalise le processus d'impression lorsque le résultat du test est positif, et il est délivré un message d'erreur lorsque le résultat du test est négatif.

2. Procédé selon la revendication 1, **caractérisé en ce que** le test de vérification des deux informations est effectué à un moment qui est déterminé par l'avancement du support d'information (5), de sorte que les données d'impression sont délivrées aux bonnes pages sur le support d'information (5).

3. Procédé selon la revendication 2, dans lequel une mémoire First-in/First-out (FIFO) est utilisée comme mémoire intermédiaire (22).

4. Procédé selon les revendications 2 et 3, dans lequel la taille de la mémoire FIFO correspond au nombre de pages du support d'information (5) qui sont présentes entre les appareils d'impression (10/1, 10/2), et dans lequel la lecture de la mémoire FIFO est commandée par l'avancement du support d'information (5).

5. Procédé selon l'une des revendications 1 à 4, **caractérisé en ce que** le test de vérification est effectué dans le second appareil d'impression (10/2).

6. Procédé selon l'une des revendications précédentes, dans lequel l'information relative aux pages est transmise conjointement à un protocole de communication de la commande d'appareil (16/1) du premier appareil d'impression (10/1) à la commande d'appareil (16/2) du second appareil d'impression (10/2).

7. Procédé selon l'une des revendications précédentes, dans lequel un repère de synchronisation (110) est généré par le premier appareil d'impression (10/1) avec une précision de position sur le support d'information (5) en vue de régler l'image d'impression, lequel repère de synchronisation est lu par un agencement de capteurs (20, 107) dans le second appareil d'impression (10/2), dont le signal est utilisé pour l'impression dans le second appareil d'impression (10/2) avec une précision de position.

8. Procédé selon la revendication 7, dans lequel le repère de synchronisation (110) est imprimé sous forme d'un repère optique sur le support d'information (5).

9. Système d'impression, dans lequel un support d'information (5) est tout d'abord imprimé par un premier appareil d'impression (10/1) puis par un second appareil d'impression (10/2), **caractérisé en ce que** :
a) des moyens sont prévus, qui réalisent au début du processus d'impression une procédure de synchronisation, dans laquelle les deux appareils d'impression (10/1, 10/2) sont réglés l'un par rapport l'autre, en utilisant un repère de synchronisation (108) placé sur le support d'information (5),
b) des moyens sont prévus, qui amènent les données d'impression feuille à feuille d'une première source de données d'impression (11) aux premier et second appareils d'impression (10/1, 10/2),
c) des moyens sont prévus, qui transmettent les informations relatives aux numéros de pages, conjointement aux données d'impression correspondantes, aux appareils d'impression (10/1, 10/2), moyens par lesquels
d) au moins une information relative au numéro de page d'une page imprimée par le premier appareil d'impression (10/1) est stockée par celui-ci dans une mémoire intermédiaire (22) au cours de son processus d'impression,
e) une unité de comparaison (21) est prévue, avec laquelle il est effectué un test feuille à feuille pour vérifier si les informations transmises au second appareil d'impression (10/2) par la première source de données d'impression (11) et les informations mémorisées dans la mémoire intermédiaire (22) correspondent à une règle prédéterminée dépendant du mode d'impression, et
f) le second appareil d'impression (10/2) réalise le processus d'impression lorsque le résultat du test est positif, et il est délivré un message d'erreur lorsque le résultat du test est négatif.

10. Système d'impression selon la revendication 9, **caractérisé en ce que** le support d'information (5) se présente sous la forme d'une bande.

11. Système d'impression selon l'une des revendications 9 ou 10, **caractérisé en ce que** la mémoire intermédiaire (22) est une mémoire FIFO.

12. Système d'impression selon l'une des revendications 9 à 11, dans lequel l'unité de comparaison (21) est reliée au moins à un dispositif de commande d'entraînement (23) du second appareil d'impression (10/2), de sorte que le moment où est effectué le test de vérification pour les deux informations peut être commandé en fonction de l'avancement du support d'information (5).

13. Système d'information selon l'une des revendications 9 à 12, dans lequel un repère de synchronisation (110) est généré par le premier appareil d'impression (10/1) avec une précision de position sur le support d'information (5) en vue de régler l'image d'impression, et dans lequel il est prévu, dans le second appareil d'impression (10/2), un agencement de capteurs (20, 107) qui lit le repère de synchronisation (110), et dans lequel le signal généré par les capteurs est utilisé et amené au dispositif de commande d'appareil (21) du second appareil d'impression (10/2) en vue de commander le processus d'impression dans le second appareil d'impression (10/2).

14. Système d'impression selon la revendication 13, dans lequel un repère de synchronisation (110) est imprimé avec précision à chaque tâche d'impression, et le repère de synchronisation (110) est placé avant la première page imprimée (104) de la tâche d'impression.

15. Système d'impression selon la revendication 13, dans lequel plusieurs repères de synchronisation (110) sont imprimés sur le support d'information (5) correspondant à chaque tâche d'impression.

16. Système d'impression selon l'une des revendications 13 à 15, dans lequel le repère de synchronisation (110) fait partie d'un code à barres (109).
